# EUROPEAN PATENT APPLICATION

(11) **EP 2 554 560 A1**
(43) Date of publication of application: **06.02.2013**
(21) Application number: 11765851.8
(22) Date of filing: 01.04.2011
(51) Int. Cl.: C08G 18/66

(54) **FLEXIBLE POLYURETHANE FOAM AND PRODUCTION METHOD THEREFOR**

(30) Priority: 02.04.2010 JP 2010086125
(71) Applicant: Asahi Glass Company, Limited, Tokyo 100-8405 (JP)
(72) Inventor: SASAKI, Takayuki, Tokyo 100-8405 (JP); KAKU, Daisuke, Tokyo 100-8405 (JP)
(74) Representative: Blodig, Wolfgang
(86) International application number: PCT/JP2011/058454
(87) International publication number: WO 2011/125951

(57) **Abstract**

To provide a process for producing a flexible polyurethane foam that has excellent moldability with a long cream time, and that has excellent hardness and durability.

A process for producing a flexible polyurethane foam, which comprises reacting a polyol mixture (X) with a polyisocyanate compound in the presence of a urethane-forming catalyst, a blowing agent and a foam stabilizer, characterized in that the polyol mixture (X) comprises a polyoxyalkylene polyol (A) having an average of from 2 to 3 hydroxy groups, a number average molecular weight of from 8,500 to 30,000 and an oxyethylene group content of from 0 to 30 mass%, a polyoxyalkylene polyol (B) having an average of from 2 to 3 hydroxy groups, a hydroxy value of from 20 to 250 mgKOH/g and an oxyethylene group content of from 0 to 20 mass%, and a polyoxyalkylene monool (D) having a hydroxy value of from 10 to 200 mgKOH/g.

## Description

### TECHNICAL FIELD

The present invention relates to a flexible polyurethane foam and a process for its production.

### BACKGROUND ART

Heretofore, a flexible polyurethane foam having a low rebound resilience i.e. low resiliency, has been used for a shock absorber, a sound absorbent or a vibration absorber.

Further, especially when a flexible polyurethane foam excellent in load dispersing property is used for cushion materials for chairs, mattresses, etc., the body pressure distribution will be more uniform, whereby feeling of fatigue, pressure sores, etc. will be reduced. Specifically, a flexible polyurethane foam used for mattresses has been known to have excellent uniformity in body pressure distribution and comfortability to sleep on the mattress when Sag-Factor as an index of the load dispersing property is within a range of from 2.05 to 2.25 (e.g. Non-Patent Document 1).

Patent Document 1 discloses a process for producing a flexible polyurethane foam by using a polyether polyol (A) having an average of from 2 to 3 hydroxy groups and a hydroxy value of from 10 to 90 mgKOH/g, a polyether polyol (B) having an average of from 2 to 3 hydroxy groups and a hydroxy value of from 15 to 250 mgKOH/g, and a polyether monool (D) having a hydroxy value of from 5 to 200 mgKOH/g.

However, the polyether polyol (A) used in each Example of Patent Document 1 is only a polyether polyol having a hydroxy value of from 14 to 28 mgKOH/g which corresponds to the value of from about 4,000 to 8000 as calculated as a number average molecular weight. In each Examples of Patent Document 1, tin 2-ethylhexanoate or dibutyltin dilaurate is used as a metal urethane-forming catalyst.

### PRIOR ART DOCUMENTS

### PATENT DOCUMENT

Patent Document 1: WO2007/099995

### NON-PATENT DOCUMENT

Non-Patent Document 1: URETHANES TECHNOLOGY INTERNATIONAL, Vol. 26, No. 5, page 11: October/November 2009, Published by Crain Communications Ltd.

### DISCLOSURE OF INVENTION

### TECHNICAL PROBLEM

In the production of a flexible polyurethane foam, when the molecular weight of a polyol is increased, it takes a long time for a cream time as an index of reactivity, whereby failure in outer appearance hardly occurs and yield improves. That is, improvement of moldability can be expected. On the other hand, the crosslinking density relatively lowers, whereby there are concerns that the hardness and durability will decrease.

Accordingly, heretofore, it has been considered that there is a difficulty in using a polyol having a number average molecular weight of more than about 8,000 to produce a flexible polyurethane foam having good physical properties, and there are no practical examples of using such a high-molecular weight polyol.

Especially, in the case of a flexible polyurethane foam to be used for mattresses, it has been considered that there is a difficulty in using a high-molecular weight polyol to produce a flexible polyurethane foam excellent in load dispersing property since the above Sag-Factor depends upon the hardness. That is, a flexible polyurethane foam using such a high-molecular weight polyol has a low hardness, and therefore it has been considered to be difficult to obtain a flexible polyurethane foam having a Sag-Factor with a suitable range and having physical properties as a flexible polyurethane foam.

The present invention has been made under these circumstances, and it is an object of the present invention to provide a process for producing a flexible polyurethane foam, by which it is possible to produce a flexible polyurethane foam having not only excellent moldability with a long cream time at the time of producing the flexible polyurethane foam, but also excellent hardness and durability, and to provide a flexible polyurethane foam obtainable by the production process.

Further, it is an object of the present invention to provide a process for producing a flexible polyurethane foam, by which it is possible to produce a flexible polyurethane foam also excellent in load dispersing property, and to provide a flexible polyurethane foam obtainable by the process.

### SOLUTION TO PROBLEM

The present invention provides the following [1] to [12].
[1] A process for producing a flexible polyurethane foam, which comprises reacting a polyol mixture (X) with a polyisocyanate compound in the presence of a urethane-forming catalyst, a blowing agent and a foam stabilizer, characterized in that the polyol mixture (X) comprises the following polyol (A), the following polyol (B) and the following monool (D):
   polyol (A): a polyoxyalkylene polyol having an average of from 2 to 3 hydroxy groups, a number average molecular weight of from 8,500 to 30,000 and an oxyethylene group content of from 0 to 30 mass%;
   polyol (B): a polyoxyalkylene polyol having an average of from 2 to 3 hydroxy groups, a hydroxy value of from 20 to 250 mgKOH/g and an oxyethylene group content of from 0 to 20 mass%;
   monool (D): a polyoxyalkylene monool having a hydroxy value of from 10 to 200 mgKOH/g.
[2] The process for producing a flexible polyurethane foam according to [1], wherein the urethane-forming catalyst contains a dioctyltin.
[3] The process for producing a flexible polyurethane foam according to [1] or [2], wherein the flexible polyurethane foam has a core density of from 10 to 110 kg/m³.
[4] The process for producing a flexible polyurethane foam according to any one of [1] to [3], wherein the proportion of the polyol (A) is from 5 to 80 parts by mass per 100 parts by mass of the total amount of the polyol (A) and the polyol (B).
[5] The process for producing a flexible polyurethane foam according to any one of [1] to [4], wherein the proportion of the monool (D) is from 1 to 25 parts by mass per 100 parts by mass of the polyol mixture (X).
[6] The process for producing a flexible polyurethane foam according to any one of [1] to [5], wherein the monool (D) is a polyoxypropylene monool obtained by ring-opening addition polymerization of propylene oxide alone to an initiator.
[7] The process for producing a flexible polyurethane foam according to any one of [1] to [6], wherein the polyol mixture (X) further contains the following polyol (C), and the proportion of the polyol (C) is from 0.1 to 10 parts by mass per 100 parts by mass of the polyol mixture (X):
   polyol (C): a polyoxyalkylene polyol having an average of from 2 to 6 hydroxy groups, a hydroxy value of from 10 to 60 mgKOH/g and an oxyethylene group content of at least 50 mass%.
[8] The process for producing a flexible polyurethane foam according to any one of [1] to [7], wherein the urethane-forming catalyst is used in a proportion of from 0.01 to 5.0 parts by mass per 100 parts by mass of the polyol mixture (X).
[9] The process for producing a flexible polyurethane foam according to any one of [1] to [8], wherein the blowing agent is only water.
[10] A flexible polyurethane foam produced by the process as defined in any one of **[1]** to [9].
[11] The flexible polyurethane foam according to [10], which is used for mattresses.
[12] The flexible polyurethane foam according to [10], which is used for interior members of automobiles.

### ADVANTAGEOUS EFFECTS OF INVENTION

According to the present invention, it is possible to obtain a flexible polyurethane foam having not only excellent moldability with a long cream time as an index of reactivity at the time of producing the flexible polyurethane foam, but also excellent hardness and durability. Further, the flexible polyurethane foam obtained has good shape-holding properties.

Further, it is possible to obtain a flexible polyurethane foam excellent in load dispersing property and air flow, which is suitably used for mattresses or interior members of automobiles.

### DESCRIPTION OF EMBODIMENTS

In this specification, the number average molecular weight (Mn) is a molecular weight as calculated as polystyrene obtained by measurement by gel permeation chromatography (GPC) employing a calibration curve prepared by using a standard polystyrene sample having a known molecular weight.

The hydroxyl value is a value measured by a method in accordance with JIS K 1557-1.

The average number of hydroxy groups of a polyol means an average of active hydrogen atoms in the initiator used for producing the polyol.

Total degree of unsaturation of a polyol is a value measured by a method in accordance with JIS K 1557 (2007).

"Polyol system solution" means a solution to be reacted with a polyisocyanate compound and contains a blowing agent, a foam stabilizer, a catalyst, a flame retardant, and other necessary additives, in addition to a polyol.

"Foam stock solution composition" is a solution obtained by mixing a polyol system solution, a polyisocyanate compound and optional other components.

In the process for producing a flexible polyurethane foam of the present invention, a polyol mixture (X) is reacted with a polyisocyanate compound in the presence of a urethane-forming catalyst, a blowing agent and a foam stabilizer.

### <Polyol mixture (X)>

The polyol mixture (X) in the present invention contains a polyol (A), a polyol (B) and a monool (D). It preferably further contains a polyol (C). Further, in some cases, it may contain a polyol (hereinafter referred to as "polyol (E)") other than the polyols (A) to (C), or a monool other than the monool (D).

### [Polyol (A)]

The polyol (A) in the present invention is a polyoxyalkylene polyol having an average of from 2 to 3 hydroxy groups, a number average molecular weight of from 8,500 to 30,000 and an oxyethylene group content of from 0 to 30 mass%. This polyoxyalkylene polyol is obtainable by subjecting an alkylene oxide to ring-opening addition polymerization to an initiator in the presence of a polymerization catalyst. The polyols (A) may be used alone or in combination of two or more.

The polymerization catalyst to be used for preparation of the polyol (A) may, for example, be an alkali metal compound catalyst (such as sodium type catalyst, potassium type catalyst or cesium type catalyst), a cationic polymerization catalyst, a double metal cyanide complex catalyst or a phosphazenium compound catalyst.

The sodium type catalyst or the potassium type catalyst may, for example, be a sodium metal, a potassium metal, a sodium alkoxide or a potassium alkoxide (such as sodium methoxide, sodium ethoxide, sodium propoxide, potassium methoxide, potassium ethoxide or potassium propoxide), sodium hydroxide, potassium hydroxide, sodium carbonate or potassium carbonate.

The cesium type catalyst may, for example, be a cesium metal, a cesium alkoxide (such as cesium methoxide, cesium ethoxide or cesium propoxide), cesium hydroxide or cesium carbonate.

The cationic polymerization catalyst is preferably MoO₂(diketonate)Cl, MoO₂(diketonate)OSO₂CF₃, trifluoromethanesulfonic acid, boron trifluoride, a boron trifluoride-coordinated compound (such as boron trifluoride diethyl etherate, boron trifluoride dibutyl etherate, boron trifluoride dioxanate, boron trifluoride acetic anhydrate or a boron trifluoride triethylamine complex compound), or an aluminum or boron compound having at least one aromatic hydrocarbon group containing a fluorine atom or aromatic hydrocarbon oxy group containing a fluorine atom.

The aromatic hydrocarbon group containing a fluorine atom may, for example, be pentafluorophenyl, tetrafluorophenyl, trifluorophenyl, 3,5-bis(trifluoromethyl)trifluorophenyl, 3,5-bis(trifluoromethyl)phenyl, β-perfluoronaphthyl or 2,2',2"-perfluorobiphenyl.

The aromatic hydrocarbon oxy group containing a fluorine atom is preferably a hydrocarbon oxy group having an oxygen atom bonded to the above aromatic hydrocarbon group containing a fluorine atom.

The double metal cyanide complex catalyst (hereinafter sometimes referred to as "DMC" catalyst) has an organic ligand. The organic ligand may be tert-butyl alcohol, n-butyl alcohol, iso-butyl alcohol, tert-pentyl alcohol, iso-pentyl alcohol, N,N-dimethylacetamide, ethylene glycol mono-tert-butyl ether, ethylene glycol dimethyl ether (also called glyme), diethylene glycol dimethyl ether (also called diglyme), triethylene glycol dimethyl ether (also called triglyme), iso-propyl alcohol or dioxane. Dioxane may be either 1,4-dioxane or 1,3-dioxane, but is preferably 1,4-dioxane. The organic ligands may be used alone or in combination of two or more.

Among them, the catalyst preferably has tert-butyl alcohol as the organic ligand. Accordingly, it is preferred to use a DMC catalyst having t-butyl alcohol as at least part of the organic ligand. Such a DMC catalyst has high activity, and a polyol with a low total degree of unsaturation can be produced with it.

The polymerization catalyst to be used for preparation of the polyol (A) is preferably an alkali metal catalyst in view of availability at a low cost. Further, a DMC catalyst is preferred with a view to obtaining a polyol with a low content of monools containing an unsaturated bond, as a by-product, that is, with a low total degree of unsaturation. A low content of monools is preferred with a view to improving the physical properties of a flexible polyurethane foam, such as durability, and also with a view to readily obtaining a polyether polyol having a high number average molecular weight at the same time.

The polyol (A) in the present invention is preferably a polyoxyalkylene polyol obtainable by subjecting an alkylene oxide to ring-opening addition polymerization to an initiator in the presence of a DMC catalyst.

The total degree of unsaturation of the polyol (A) is preferably at most 0.02 meq/g. It is particularly preferably at most 0.015 meq/g since excellent durability can be obtained. It is more preferably at most 0.010 meq/g.

As the initiator to be used for preparation of the polyol (A), compounds having 2 or 3 active hydrogen atoms (hydrogen atoms of the hydroxy group or the amino group, with which the alkylene oxide may react) are used alone or in combination. The initiator is preferably a hydroxy group-containing compound such as a polyhydric alcohol or a polyhydric phenol. A compound having 4 or more active hydrogen atoms may be used in combination in a small amount.

The compound having two active hydrogen atoms may, for example, be specifically a dihydric alcohol such as ethylene glycol, propylene glycol, 1,4-butanediol, diethylene glycol or dipropylene glycol. Further, the compound having 3 active hydrogen atoms may, for example, be specifically a trihydric alcohol such as glycerol or trimethylolpropane. Further, it is preferred to use a high hydroxy value polyoxyalkylene polyol obtained by subjecting an alkylene oxide, preferably propylene oxide to ring-opening addition polymerization to such a compound. Specifically, it is preferred to use a high hydroxy value polyoxyalkylene polyol (preferably polyoxypropylene polyol) having 2 or 3 hydroxy groups and having a molecular weight at a level of from 200 to 500 per one hydroxy group, i.e. a hydroxy value of from 110 to 285 mgKOH/g.

The alkylene oxide to be used for preparation of the polyol (A) may, for example, be ethylene oxide, propylene oxide, 1,2-epoxybutane or 2,3-epoxybutane. Among them, propylene oxide alone, or a combination of propylene oxide with ethylene oxide is preferred, and propylene oxide alone is particularly preferred. That is, the polyol (A) is preferably a polyoxypropylene polyol obtained by subjecting propylene oxide alone to ring-opening addition polymerization to the initiator. When propylene oxide alone is used, durability of a flexible polyurethane foam to be obtained when humidified will be improved.

The oxyethylene group content in the polyol (A) is preferably at most 30 mass%, particularly preferably at most 15 mass%. Further, the lower limit is 0 mass%. When the oxyethylene group content is at most 30 mass%, the durability when humidified will be good.

In a case where propylene oxide and ethylene oxide are used in combination, either polymerization method of block polymerization and random polymerization may be employed. Further, both of block polymerization and random polymerization may be combined. In the case of block polymerization, the order of ring-opening addition polymerization is preferably such that propylene oxide and then ethylene oxide are added in this order, or ethylene oxide is added first, and propylene oxide and ethylene oxide are added in this order. By ring-opening addition polymerization in this order, many of hydroxy groups of the polyoxyalkylene polyol (A) become primary hydroxy groups, whereby the reactivity between the polyol (A) and the polyisocyanate compound will be high. As a result, moldability of the flexible polyurethane foam to be obtained are likely to be good. The terminal is preferably ethylene oxide.

The average number of hydroxy groups in the polyol (A) in the present invention is from 2 to 3,. When the average number of hydroxy groups is from 2 to 3, physical properties of a flexible polyurethane foam to be obtained, such as the compression set will be good. Further, the flexible polyurethane foam to be obtained will well elongate, its hardness will be moderate, and physical properties such as tensile strength will be good. As the polyol (A), it is preferred to use a polyoxyalkylene diol having 2 hydroxy groups in an amount of from 50 to 100 parts by mass per 100 parts by mass of the polyol (A), whereby the temperature sensitivity of the flexible polyurethane foam to be obtained is likely to be suppressed. The polyol (A) is particularly preferably a polyoxyalkylene diol having 2 hydroxy groups.

The number average molecular weight of the polyol (A) in the present invention is from 8,500 to 30,000. Within such a range, the cream time in the production of a flexible polyurethane foam becomes moderately long, whereby good moldability can be obtained. The number average molecular weight of the polyol (A) is more preferably from 9,500 to 25,000, further more preferably from 10,000 to 20,000.

When the molecular weight is within such a range, the cream time becomes moderately long, and it is possible to obtain a flexible polyurethane foam having certain physical properties and no shrinkage.

The polyol (A) in the present invention preferably has a hydroxyl value of from 3 to 20 mgKOH/g. Within such a range, the cream time at the time of production of the flexible polyurethane foam becomes moderately long, whereby good moldability can be obtained. The hydroxyl value is more preferably from 5 to 17 mgKOH/g, further more preferably at least 3 mgKOH/g and less than 10 mgKOH/g.

When the hydroxyl value is within such a range, the cream time becomes moderately long, and further it is possible to obtain a flexible polyurethane foam having certain physical properties and no shrinkage.

Further, when the hydroxyl value is within a range of from 8 to 12 mgKOH/g, it is possible to obtain a flexible polyurethane foam having good Sag-Factor (Sag-Factor will be described in Examples) and shape-holding properties, and further having good air flow.

The polyol (A) in the present invention may be a polymer-dispersed polyol. The polyol (A) being a polymer-dispersed polyol means a disperse system wherein polymer particles (dispersoid) are stably dispersed in the polyol (A) as the base polyol (dispersion medium).

The polymer of the polymer particles may be an addition polymerization polymer or a polycondensation polymer. The addition polymerization polymer may be obtained by homopolymerizing or copolymerizing a monomer such as acrylonitrile, styrene, a methacrylate or an acrylate. Further, the polycondensation polymer may, for example, be polyester, polyurea, polyurethane or polymethylolmelamine. By the presence of the polymer particles in the polyol, the hydroxy value of the polyol can be suppressed to be low, the hardness of the flexible polyurethane foam can be made high, and such is effective to improve mechanical properties such as the tensile strength.

The content of the polymer particles in the polymer-dispersed polyol is not particularly limited. With a view to sufficiently obtaining an effect by incorporating the polymer particles, the content of the polymer particles present in 100 parts by mass of the polyol mixture (X) is preferably at least 1 part by mass, more preferably at least 5 parts by mass. The upper limit is preferably at most 40 parts by mass, in order to maintain the modlability of the flexible polyurethane foam and prevent the viscosity of the polyol mixture (X) from being too high.

Further, physical properties (such as the number average molecular weight, the hydroxy value and the total degree of unsaturation) of the polymer-dispersed polyol as the polyol are with respect to the base polyol excluding the polymer particles.

### [Polyol (B)]

The polyol (B) in the present invention is a polyoxyalkylene polyol having an average of from 2 to 3 hydroxy groups, a hydroxy value of from 20 to 250 mgKOH/g and an oxyethylene group content of from 0 to 20 mass%. This polyoxyalkylene polyol can be obtained, in the same manner as the polyol (A), by subjecting an alkylene oxide to ring-opening addition polymerization to an initiator in the presence of a polymerization catalyst.

The polyol (B) may be used alone or in combination of two or more.

The polymerization catalyst to be used for preparation of the polyol (B) is preferably a phosphazene compound, a Lewis acid compound, an alkali metal compound catalyst, a double metal cyanide complex catalyst or the like, and among them, an alkali metal compound catalyst is particularly preferred.

The alkali metal compound catalyst is preferably an alkali metal compound or an alkali metal hydroxide such as a potassium compound such as potassium hydroxide or potassium methoxide, or a cesium compound such as cesium metal, cesium hydroxide, cesium carbonate or cesium methoxide.

As the initiator to be used for preparation of the polyol (B), compounds having 2 or 3 active hydrogen atoms in the molecule are used alone or in combination. A compound having 4 or more active hydrogen atoms may be used in combination in a small amount.

The compound having 2 or 3 active hydrogen atoms may, for example, be specifically a polyhydric alcohol such as ethylene glycol, propylene glycol, 1,4-butanediol, diethylene glycol, dipropylene glycol, glycerol or trimethylolpropane; a polyhydric phenol such as bisphenol A; or an amine such as monoethanolamine, diethanolamime, triethanolamine or piperazine. Among them, a polyhydric alcohol is particularly preferred. Further, it is preferred to use a high hydroxy value polyoxyalkylene polyol obtained by subjecting an alkylene oxide, preferably propylene oxide to ring-opening addition polymerization to such a compound.

The alkylene oxide to be used for preparation of the polyol (B) may, for example, be ethylene oxide, propylene oxide, 1,2-epoxybutane or 2,3-epoxybutane. Among them, propylene oxide alone or a combination of propylene oxide with ethylene oxide is preferred, and propylene oxide alone is particularly preferred.

The polyol (B) is preferably a polyol having a low oxyethylene group content, and the oxyethylene group content in the polyol (B) is from 0 to 20 mass%, preferably from 0 to 10 mass%.

Particularly preferred is a polyoxypropylene polyol having only oxypropylene groups as the oxyalkylene groups. By using such a polyol having a low oxyethylene group content, the durability of a flexible polyurethane foam to be obtained when humidified will be improved.

The average number of hydroxy groups of the polyol (B) in the present invention is from 2 to 3. When the average number of hydroxy groups is from 2 to 3, physical properties of the flexible polyurethane foam to be obtained, such as the compression set, will be moderate, and the flexible polyurethane foam to be obtained will have low rebound resilience, excellent elongation, moderate hardness, a small change of hardness (low temperature sensitivity) and excellent physical properties such as the tensile strength.

When two or more types of the polyols (B) are used in combination, the average number of hydroxy groups after mixing the polyols is preferably from 2 to 2.8. When the average number of hydroxy groups is within the above range, especially at the time of locally applying pressure on a flexible polyurethane foam, such as bending of the flexible polyurethane foam, a tear at a bent portion will easily be prevented.

Further, as the polyol (B), it is preferred to use a polyoxyalkylene diol having an average of 2 hydroxy groups and a polyoxyalkylene triol having an average of 3 hydroxy groups in combination. The proportion of the polyoxyalkylene diol contained in 100 parts by mass of the entire polyol (B) is preferably at least 30 parts by mass, more preferably at least 40 parts by mass. The upper limit is 90 parts by mass.

The hydroxyl value of the polyol (B) in the present invention is from 20 to 250 mgKOH/g.

When the hydroxy value is at least 20 mgKOH/g, collapse or the like will be suppressed, and a flexible polyurethane foam can be stably produced. Further, when the hydroxy value is at most 250 mgKOH/g, the rebound resilience can be made low without impairing the flexibility of the flexible polyurethane foam to be produced. The hydroxy value of the polyol (B) is more preferably from 20 to 200 mgKOH/g, more preferably from 50 to 180 mgKOH/g.

The polyol (B) in the present invention may be a polymer-dispersed polyol. The polymer of the polymer particles may be the same polymer as disclosed for the polyol (A).

### [Polyol (C)]

The polyol (C) in the present invention is a polyoxyalkylene polyol having an average of from 2 to 6 hydroxy groups, a hydroxy value of from 10 to 60 mgKOH/g and an oxyethylene group content of at least 50 mass%.

The polyol (C) may be used alone or in combination of two or more.

The polyol (C) is obtainable, in the same manner as the polyol (A) or the polyol (B), by subjecting an alkylene oxide to ring-opening addition polymerization to an initiator in the presence of a polymerization catalyst. The polyol (C) may have a structure having ethylene oxide and propylene oxide randomly polymerized by ring-opening addition polymerization, or a structure having ethylene oxide polymerized as a block immediately after the terminal or the initiator by ring-opening addition polymerization. Further, it may be polyethylene glycol obtained by subjecting only ethylene oxide to ring-opening addition polymerization immediately after the initiator. By using the polyol (C), a cell-opening effect is confirmed, and addition of the polyol (C) is effective to improve the air flow.

The polymerization catalyst and the initiator to be used for preparation of the polyol (C) may be the same as ones used for the above polyol (B). Among the above polymerization catalysts, an alkali metal compound catalyst is particularly preferred, and among the above initiator, a polyhydric alcohol or an amine is particularly preferred. The polyhydric alcohol as the initiator may, for example, be ethylene glycol, propylene glycol, 1,4-butanediol, dipropylene glycol, glycerol, diglycerol or pentaerythritol. The amine as the initiator may, for example, be an amine such as monoethanolamine, diethanolamine, triethanolamine or piperazine.

The alkylene oxide to be used for preparation of the polyol (C) may, for example, be ethylene oxide, propylene oxide, 1,2-epoxybutane or 2,3-epoxybutane. At least ethylene oxide is preferably used. It is more preferred to use ethylene oxide alone or a combination of propylene oxide with ethylene oxide. The oxyethylene group content in the polyol (C) is at least 50 mass%, preferably at least 60 mass%. When the oxyethylene group content in the polyol (C) is at least 50 mass%, a high air flow can be secured at the time of adding the polyol (C).

Particularly, as the polyol (C), preferred is a polyol obtainable by subjecting a mixture of propylene oxide and ethylene oxide to ring-opening addition polymerization. In such a case, the oxyethylene group content in the polyol (C) is preferably from 50 to 95 mass%, more preferably from 60 to 90 mass%.

When the average number of hydroxy groups of the polyol (C) is from 2 to 6, physical properties of the resulting flexible polyurethane foam, such as compression set, becomes moderate. The average number of hydroxy groups is preferably from 2 to 4.

When the hydroxy value of the polyol (C) is from 10 to 60 mgKOH/g, the resulting flexible polyurethane foam is excellent in elongation, has moderate hardness, and is excellent in physical properties such as tensile strength. The hydroxy value is more preferably from 15 to 50 mgKOH/g.

### [Monool (D)]

The monool (D) in the present invention is a polyoxyalkylene monool having a hydroxy value of from 10 to 200 mgKOH/g. This polyoxyalkylene monool is obtainable by subjecting an alkylene oxide to ring-opening addition polymerization in the presence of a polymerization catalyst, in the same manner as in the polyol (A) or the polyol (B), to an initiator having one active hydrogen atom.

The monool (D) may be used alone or in combination of two or more.

The polymerization catalyst to be used for preparation of the monool (D) is preferably a double metal cyanide complex catalyst, a phosphazene compound catalyst, a Lewis acid compound catalyst or an alkali metal compound catalyst, and among them, a double metal cyanide complex catalyst is particularly preferred. As the double metal cyanide complex catalyst, the above double metal cyanide complex catalyst can be used.

As the initiator to be used for preparation of the monool (D), a compound having only one active hydrogen atom is used. It may, for example, be specifically a monohydric alcohol such as methanol, ethanol, n-propyl alcohol, isopropyl alcohol, n-butyl alcohol or tert-butyl alcohol; a monohydric phenol such as phenol or nonyl phenol; or a secondary amine such as dimethylamine or diethylamine. Further, a high hydroxy value polyoxyalkylene monool having a hydroxy value higher than the hydroxy value of the aimed monool (D) may also be used as the initiator, similar to the high hydroxy value polyoxyalkylene polyol for preparation of the polyol (A) or the like.

The alkylene oxide to be used for preparation of the monool (D) may, for example, be ethylene oxide, propylene oxide, 1,2-epoxybutane or 2,3-epoxybutane. Among them, propylene oxide alone or a combination of propylene oxide with ethylene oxide is preferred, and propylene oxide alone is particularly preferred.

That is, the monool (D) is preferably a polyoxypropylene monool obtained by subjecting propylene oxide alone to ring-opening addition polymerization to the initiator. Use of propylene oxide alone is preferred, whereby the durability of a flexible polyurethane foam to be obtained when humidified will be improved.

The average number of hydroxy groups of the monool (D) in the present invention is 1. When the hydroxy value of the monool (D) is from 10 to 200 mgKOH/g, the viscosity of a polyol system solution will not be too high, thus leading to easy handling. Further, a flexible polyurethane foam obtainable can have excellent air flow without impairing the physical properties. The hydroxy value is preferably from 10 to 120 mgKOH/g.

Further, the polyol mixture (X) in the present invention may contain a monool (for example, a polyoxypropylene monool having a hydroxy value of higher than 200 mgKOH/g) other than the monool (D), but usually, it preferably contains no monool other than the monool (D). Even when the polyol mixture (X) in the present invention contains a monool other than the monool (D), its content is preferably at most 5 parts by mass, more preferably at most 2 parts by mass per 100 parts by mass of the polyol mixture (X).

### [Polyol (E)]

The polyol (E) in the present invention is a polyol which is not corresponding to any one of the polyol (A), the polyol (B) and the polyol (C), and it may, for example, be a polyol having a hydroxy value higher than that of the polyol (B), a polyol having an average number of hydroxy groups larger than those of the polyol (A) and the polyol (B) and having an oxyethylene content higher than that of the polyol (C), or a high molecular weight polyol other than the polyoxyalkylene polyol.

The polyol (E) is preferably a polyol having an average of from 2 to 6 hydroxy groups and a hydroxy value of from 300 to 1,830 mgKOH/g. The polyol (E) is more preferably a polyol having an average of from 3 to 4 hydroxy groups and a hydroxy value of from 300 to 600 mgKOH/g. This polyol is preferably e.g. a polyhydric alcohol, an amine having from 2 to 6 hydroxy groups or a polyoxyalkylene polyol. Such a polyol having a high hydroxy value functions as a crosslinking agent, whereby mechanical properties such as hardness will be improved. Particularly when a large amount of a blowing agent is used to produce a low density (light-weight) flexible polyurethane foam, the foaming stability will be good.

The polyhydric alcohol which can be used as the polyol (E) may, for example, be ethylene glycol, propylene glycol, 1,4-butanediol, dipropylene glycol, glycerol, diglycerol or pentaerythritol. The amine having from 2 to 6 hydroxy groups may, for example, be diethanolamine or triethanolamine. The polyoxyalkylene polyol may be a polyoxyalkylene polyol obtained by subjecting an alkylene oxide to ring-opening addition polymerization to an initiator, in the same manner as the polyol (B) or the like. The initiator to be used for preparation of the polyol (E) which is a polyoxyalkylene polyol may, for example, be a polyhydric alcohol which may also be used as the polyol (E) or an initiator to be used for preparation of the polyol (B).

The alkylene oxide to be used for preparation of a polyoxyalkylene polyol as the polyol (E) may, for example, be ethylene oxide, propylene oxide, 1,2-epoxybutane or 2,3-epoxybutane. Among them, propylene oxide alone or a combination of propylene oxide with ethylene oxide is preferred, and propylene oxide alone is particularly preferred.

That is, a polyoxyalkylene polyol as the polyol (E) is preferably a polyoxypropylene polyol obtained by subjecting propylene oxide alone to ring-opening addition polymerization to the initiator. The polyol (E) is preferably the polyoxyalkylene polyol among them, particularly preferably polyoxypropylene polyol. Use of propylene oxide alone is preferred since the durability of a flexible polyurethane foam to be obtained when humidified is improved. The polyols (E) may be used alone or in combination of two or more.

In the present invention, the polyol (E) may be a polyester polyol or a polycarbonate polyol, the average number of hydroxy groups and the hydroxy value of which are not limited to the above range. The average number of hydroxy groups of such a polyol is preferably from 2 to 3, and the hydroxy value is preferably from 20 to 300 mgKOH/g.

### [Blend of polyol mixture (X)]

In the polyol mixture (X), the proportion of the polyol (A) is preferably from 5 to 80 parts by mass, more preferably from 10 to 50 parts by mass per 100 parts by mass of the total amount of the polyol (A) and the polyol (B). When the proportion of the polyol (A) in the polyol mixture (X) is at least 5 parts by mass, a low resilience flexible polyurethane foam with a small change in the rebound resilience and the hardness relative to the temperature change (low heat sensitivity) is likely to be obtained. Further, collapse or the like will be suppressed, and a flexible polyurethane foam can be stably produced. On the other hand, when it is at most 80 parts by mass, the flexible polyurethane foam is likely to have a favorable hardness.

Here, the amount of polymer particles in the polymer-dispersed polyol is not included in the content of the polyol.

Further, per 100 parts by mass of the polyol mixture (X), the proportion of the polyol (A) and the polyol (B) in total is preferably at least 70 parts by mass, more preferably at least 75 parts by mass, particularly preferably at least 80 parts by mass. The upper limit is 99 parts by mass. When the proportion of the polyol (A) and the polyol (B) in total in the polyol mixture (X) is within the above range, a flexible polyurethane foam being excellent in the low resiliency, being excellent in the durability and having good air flow can be obtained.

Further, the proportion of the monool (D) is preferably from 1 to 25 parts by mass, more preferably from 1 to 20 parts by mass, particularly preferably from 1 to 14 parts by mass, per 100 parts by mass of the polyol mixture (X). When the proportion of the monool (D) is within the above range, a flexible polyurethane foam being excellent in the low resiliency, being excellent in the durability and having good air flow will be obtained.

Further, in a case where the polyol mixture (X) contains the polyol (C), the proportion of the polyol (C) is preferably from 0.1 to 10 parts by mass, more preferably from 2 to 8 parts by mass, per 100 parts by mass of the polyol mixture (X). When the polyol (C) is used and the proportion of the polyol (C) is within the above range, the air flow of a flexible polyurethane foam to be obtained will be improved.

Further, it is not necessary so much that the polyol mixture (X) contain the polyol (E), however, if the polyol (E) is used, the proportion of the polyol (E) is preferably at most 10 parts by mass, more preferably at most 5 parts by mass, particularly preferably at most 2 parts by mass, per 100 parts by mass of the polyol mixture (X). It is preferred that the polyol (E) is contained in an amount of at least 0.5 part by mass with a view to sufficiently obtaining an effect by incorporating the polyol (E).

In the present invention, a specific example of the preferred composition of the polyol mixture (X) (100 parts by mass) is such that the polyol (A) is from 10 to 30 parts by mass, the polyol (B) is from 50 to 80 parts by mass, the polyol (C) is from 0 to 8 parts by mass, the monool (D) is from 1 to 24 parts by mass, and the polyol (E) is from 0 to 5 parts by mass.

### <Polyisocyanate compound>

The polyisocyanate compound to be used in the present invention is not particularly limited, and may, for example, be an aromatic, alicyclic or aliphatic polyisocyanate having two or more isocyanate groups; a mixture of two or more of the above polyisocyanates; or a modified polyisocyanate obtained by modification thereof.

The polyisocyanate compound may, for example, be specifically tolylene diisocyanate (TDI), diphenylmethane diisocyanate (MDI), polymethylene polyphenyl polyisocyanate (common name: crude MDI), xylylene diisocyanate (XDI), isophorone diisocyanate (IPDI) or hexamethylene diisocyanate (HMDI). Further, the modified polyisocyanate may, for example, be specifically a prepolymer type modified product, a nurate modified product, a urea modified product or a carbodiimide modified product of the above polyisocyanate. Among them, TDI, MDI, crude MDI or a modified product thereof is preferred. Further, among them, TDI, crude MDI or a modified product thereof (particularly preferably a prepolymer type modified product) is preferably used, whereby the foaming stability will be improved, the durability will be improved, etc. Particularly, when a polyisocyanate compound having relatively low reactivity is preferred among TDI, crude MDI and a modified product thereof, whereby the air flow will be improved. Specifically, a TDI mixture with a high proportion (particularly preferably at least 20 mass%) of 2,6-TDI is preferred.

The amount of use of the polyisocyanate compound is such an amount that the ratio of all active hydrogen-containing compounds and the polyisocyanate compound in the foaming stock solution composition is preferably from 80 to 130, more preferably from 90 to 130, most preferably from 95 to 120 by the isocyanate index.

The active hydrogen-containing compound means the polyol mixture (X), water which may be used as the blowing agent, or the like. The isocyanate index is represented by 100 times the value obtained by dividing the equivalent amount of isocyanate groups in the polyisocyanate compound by the total equivalent amount of all active hydrogen atoms in all active hydrogen-containing compounds in the foaming stock solution composition.

When the above isocyanate index is at least 80, the flexible polyurethane foam obtained is readily be cut for industrial use, such being preferred. When the above isocyanate index is at least 90, the polyols and the monool will moderately react with the polyisocyanate compound, the influence as the plasticizer tends to be small, and good washing durability will be obtained, such being preferred. Further, it is also preferred from the viewpoints that the urethane-forming catalyst is less likely to be diffused, and that the flexible polyurethane foam produced hardly undergoes discoloration. When the above isocyanate index is at most 130, the foaming properties are likely to be stable, whereby it is possible to obtain a flexible polyurethane foam having a good appearance.

### <Urethane-forming catalyst>

As the urethane-forming catalyst to react the polyol mixture (X) with the polyisocyanate compound, one which is known as a catalyst for accelerating the urethane-forming reaction, may suitably be used.

For example, an amine compound, an organic metal compound or a metal carboxylate may be used alone or in combination of two or more.

The amine compound may be a tertiary amine such as triethylenediamine, bis(2-dimethylaminoethyl) ether or N,N,N',N'-tetramethylhexamethylenediamine.

The organic metal compound may, for example, be a dibutyltin such as dibutyltin oxide, dibutyltin dilaurate, dibutyltin or dibutyltin diacetate; a dioctyltin such as dioctyltin oxide, dioctyltin dilaurate or dioctyltin diacetate; stannous octoate, tin neodecanoate or bismuth octylate.

The metal carboxylate may, for example, be potassium acetate or potassium 2-ethyl hexanoate.

The amount of use of the urethane-forming catalyst in total is preferably from 0.001 to 5.0 parts by mass, more preferably from 0.01 to 3.0 parts by mass per 100 parts by mass of the polyol mixture (X). When it is at most 5.0 parts by mass, the foaming reaction will easily be controlled, and when it is at most 3.0 parts by mass, shrinkage of the flexible polyurethane foam will be suppressed, and when it is at least 0.001 part by mass, curing of the flexible polyurethane foam will be good, such being preferred.

Especially, it is preferred that the urethane-forming catalyst contains an organic metal compound, and it is more preferred that an organic metal compound and a tertiary amine are used in combination since the compatibility between the blowing agent and the polyisocyanate compound will be good, whereby small homogeneous bubbles will form at the time of foaming.

The organic metal compound is preferably a dioctyltin in view of easy control of the reactivity. That is, it is preferred that the urethane-forming catalyst contains a dioctyltin.

When a dioctyltin is used, it is especially easy to control an initial reactivity, it takes a long time for a cream time of a foam stock solution composition, failure in outer appearance is unlikely to occur, and yield improves. That is, a dioctyltin is particularly preferred to secure good cream time at the time of producing the flexible polyurethane foam in combination with the polyol (A) having a high molecular weight, since the activity of a dioctyltin is not too high as compared with a metal urethane catalyst such as tin 2-ethylhexanoate or dibutyltin dilaurate,.

When a dioctyltin is used, its amount is preferably from 0.01 to 3.0 parts by mass, more preferably from 0.03 to 2.0 parts by mass, further preferably from 0.05 to 1.0 part by mass, most preferably from 0.07 to 0.5 part by mass, per 100 parts by mass of the polyol mixture (X). When it is at most 3.0 parts by mass, shrinkage of the flexible polyurethane foam will be suppressed, and when it is at least 0.01 part by mass, settling of the flexible polyurethane foam will be suppressed, whereby a flexible polyurethane foam having a good appearance can be produced, such being preferred.

Further, it is preferred to use a dioctyltin in combination with the poyol (A) having a high molecular weight, since air flow of the flexible polyurethane foam obtainable becomes good.

In a case where an amine and an organic metal compound are used in combination as the urethane-forming catalyst, combination of only a tertiary amine as the amine and a dioctyltin as the organic metal compound is preferred since e.g. cream time and air flow become good.

The tertiary amine is preferably triethylenediamine, in view of easy control of the forming behavior and in view of the economical efficiency. In a case where a tertiary amine is used, its amount is preferably from 0.01 to 3.0 parts by mass, more preferably from 0.05 to 2.0 parts by mass, further preferably from 0.1 to 1.0 part by mass, most preferably from 0.2 to 0.5 part by mass, per 100 parts by mass of the polyol mixture (X). When it is at most 3.0 parts by mass, the foaming reaction will easily be controlled, and when it is at least 0.01 part by mass, good curing properties will be obtained.

### <Foam stabilizer>

The foam stabilizer may, for example, be a silicone type foam stabilizer or a fluorine type foam stabilizer. Among them, a silicone type foam stabilizer is preferred. Among the silicone type foam stabilizers, preferred is a silicone type foam stabilizer containing a polyoxyalkylene/dimethylpolysiloxane copolymer as the main component. The foam stabilizer may be the polyoxyalkylene/dimethylpolysiloxane copolymer itself or may be a mixture of it with another component to be combined. Such another component to be combined may, for example, be polyalkylmethylsiloxane, a glycol or a polyoxyalkylene compound. The foam stabilizer is particularly preferably a foam stabilizer mixture containing the polyoxyalkylene/dimethylpolysiloxane copolymer, polyalkylmethylsiloxane and a polyoxyalkylene compound, in view of excellent stability of a flexible polyurethane foam obtainable.

Such a foam stabilizer mixture may, for example, be SZ-1127, L-580, L-582, L-520, SZ-1919, L-5740S, L-5740M, SZ-1111, SZ-1127, SZ-1162, SZ-1105, SZ-1328, SZ-1325, SZ-1330, SZ-1306, SZ-1327, SZ-1336, SZ-1339, L-3601, SZ-1302, SH-192, SF-2909, SH-194, SH-190, SRX-280A, SRX-298, SF-2908, SF-2904, SRX-294A, SF-2965, SF-2962, SF-2961, SRX-274C, SF-2964, SF-2969, PRX-607, SZ-1711, SZ-1666, SZ-1627, SZ-1710, L-5420, L-5421, SZ-1669, SZ-1649, SZ-1654, SZ-1642, SZ-1720, SH-193, etc. tradenames, manufactured by Dow Corning Toray Co., Ltd.; F-114, F-121, F-122, F-348, F-341, F-502, F-506, F-607, F-606, etc. manufactured by Shin-Etsu Chemical Co., Ltd.; Y-10366, L-5309, TFA-4200, TFA-4202, etc. manufactured by GE Toshiba Silicones; or B-8110, B-8017, B-4113, B-8727LF, B-8715LF, B-8404, B-8462, etc. manufactured by Goldschmidt. The foam stabilizers may be used in combination of two or more, or a foam stabilizer other than the above specific foam stabilizer may be used in combination.

The amount of use of the foam stabilizer is preferably from 0.01 to 3.0 parts by mass, more preferably from 0.1 to 2.5 parts by mass, per 100 parts by mass of the polyol mixture (X). When it is at least 0.01 part by mass, collapse and the like will be suppressed, whereby the flexible polyurethane foam can stably be produced, and when it is at most 3.0 parts by mass, shrinkage of the flexible polyurethane foam can be suppressed.

### <Blowing agent>

As the blowing agent, a known blowing agent such as a fluorinated hydrocarbon may be used. Further, the blowing agent is preferably at least one member selected from the group consisting of water and inert gas. The inert gas may, for example, be specifically preferably the air, nitrogen or carbon dioxide gas. Among them, water is more preferred in consideration of the environment, and it is most preferred to use water alone as the blowing agent.

The amount of use of the blowing agent is, in a case where water is used, preferably at most 10 parts by mass, more preferably from 0.1 to 4.0 parts by mass, per 100 parts by mass of the polyol mixture (X).

When a low density flexible polyurethane foam is to be produced, it is preferred to use water in an amount of from 0.5 to 5.0 parts by mass per 100 parts by mass of the polyol mixture.

### <Flame retardant>

The flexible polyurethane foam of the present invention may contain a flame retardant. The flame retardant may be an organic compound such as a halogen-containing compound, a phosphate ester compound or a halogen-containing phosphate ester compound, or a resin type flame retardant such as melamine. Further, an inorganic compound such as aluminum hydroxide, zinc oxide or expandable graphite may be mentioned. Such flame retardants may be used alone or in combination as a mixture of two or more of them. The halogen-containing compound may, for example, be CR-504L manufactured by DAIHACHI CHEMICAL INDUSTRY, CO., LTD., a melamine powder manufactured by Nissan Chemical Industries, Ltd., or FYROL PCF manufactured by ICL-IP JAPAN Ltd.

For example, a flexible polyurethane foam to be used for mattresses is required to have flame retardancy depending upon the particular application in some cases, and the above flame retardant may be used depending upon the application.

The content of the flame retardant is preferably from 3 to 60 parts by mass, more preferably from 5 to 50 parts by mass, per 100 parts by mass of the polyol mixture (X).

### <Other assistants>

When a flexible polyurethane foam is to be produced in the present invention, in addition to the above-described urethane-forming catalyst, blowing agent, foam stabilizer and flame retardant, desired additives may also be used. The additives may, for example, be a filler such as potassium carbonate or barium sulfate; a surfactant such as an emulsifier; an anti-aging agent such as an antioxidant or an ultraviolet absorber; melamine, urea or a derivative thereof; and a plasticizer, a coloring agent, an antifungal agent, a cell opener, a dispersing agent and a discoloration inhibiter.

In the present invention, as a preferred combination of the polyol mixture (X) and the urethane-forming catalyst, by which all of the cream time, the air flow and the Sag-Factor are stably within preferred ranges, the polyol mixture (X) is a mixture comprising, as the polyol (A), polypropylene glycol having an average of 2 hydroxy groups and a hydroxy value of 11 mgKOH/g, as the polyol (B), polypropylene glycol having an average of 2 hydroxy group and a hydroxy value of 160, as the polyol (C), polyoxyethylene propylenetriol having an average of 3 hydroxy groups and a hydroxy value of 48 mgKOH/g, and as the monool (D), polypropylene monool having 1 hydroxy group and a hydroxy value of 16.7 mgKOH/g, and the urethane-forming catalyst is a tertiary amine or a dioctyltin catalyst.

In the above combination, preferred proportions of the polyol (A), the polyol (B), the polyol (C) and the monool (D) in the polyol mixture (X), are from 10 to 30 parts by mass, from 50 to 80 parts by mass, from 1 to 8 parts by mass, and from 1 to 24 parts by mass, respectively. Further, the tertiary amine is from 0.01 to 3 parts by mass, and the dioctyltin catalyst is from 0.01 to 3 parts by mass, per 100 parts by mass of the polyol mixture (X).

### <Foaming method>

A method for forming the flexible polyurethane foam to be obtained by the present invention may be a method of injecting a foam stock solution composition into a closed mold, followed by foaming and molding (a mold method) or a method of foaming a foam stock solution composition in an open system (a slab method), and a slab method is preferred. Specifically, it may be carried out by a known method such as a one shot method, a semiprepolymer method or a prepolymer method. For production of the flexible polyurethane foam, a commonly employed production apparatus may be employed.

In the process for producing the flexible polyurethane foam of the present invention, the polyol (A) having a high-molecular weight is used, whereby it takes long time for cream time of a foam stock solution composition, and therefore it is possible to obtain good reactivity. Accordingly, failure in outer appearance is unlikely to occur, and yield improves.

With a view to readily obtaining good moldability, the cream time is preferably at least 10 seconds, more preferably at least 15 seconds. From the viewpoint of productivity, the cream time is preferably at most 50 seconds, more preferably at most 40 seconds.

### <Flexible polyurethane foam>

The flexible polyurethane foam obtained in the present invention has a good hardness although the polyol (A) having a high-molecular weight is used. Further, it is also possible to obtain good load dispersing property. The reason considered such that the polyol (A) having a high-molecular weight moderately forms a urethane network with the polyol (B) via a polyisocyanate, whereby a flexible polyurethane foam excellent in the body pressure dispersion having a value of Sag-Factor within a range of from 2.05 to 2.25 is formed.

In this specification, as indices of the hardness, the 25% hardness (ILD), the 50% hardness (ILD) and the 65% hardness (ILD) are employed. The higher the value becomes, the higher the hardness becomes.

Practically, the 25% hardness (ILD) of the flexible polyurethane foam is preferably at least 40N/314 cm², more preferably at least 50N/314 cm².

The 50% hardness (ILD) is preferably at least 60N/314 cm², more preferably at least 75N/314 cm².

The 65% hardness (ILD) is preferably at least 80N/314 cm², more preferably at least 100N/314 cm².

The flexible polyurethane foam obtainable in the present invention has a good durability although a high-molecular weight polyol (A) is used.

In this specification, as indices of the durability, a compression set and a wet set at a compressibility of 50% and 90% are employed. The smaller the value becomes, the better the durability becomes.

The flexible polyurethane foam obtained in the present invention is excellent in durability especially under dry heat conditions, and therefore a value of the compression set at 90% of at most 10% can be achieved.

Practically, the 50% compression set of the flexible polyurethane foam is preferably at most 10%, more preferably at most 6%, furthermore preferably at most 5%, most preferably at most 4%.

The 90% compression set is preferably at most 20%, more preferably at most 15%, furthermore preferably at most 12%, most preferably at most 10%.

The 50% wet set is preferably at most 15%, more preferably at most 10%, furthermore preferably at most 5%, most preferably at most 4%.

The 90% wet set is preferably at most 20%, more preferably at most 15%, furthermore preferably at most 12%, most preferably at most 10%.

Further, according to the present invention, it is possible to obtain a flexible polyurethane foam having a value of Sag-Factor represented by "65% hardness (ILD)/25% hardness (ILD)" shown in the after-mentioned Examples, being from 2.05 to 2.25 as a particularly preferred range as physical properties for mattresses.

The rebound resilience of the core of the flexible polyurethane foam obtainable in the present invention is preferably at most 20%, more preferably at most 18%, furthermore preferably at most 15%, most preferably at most 12%. When the rebound resilience of the core is at most 20%, sufficient low resilience can be achieved. Usually, the lower limit is 0%.

The core density of the flexible polyurethane foam obtained in the present invention is preferably from 10 to 110 kg/m³, more preferably from 10 to 80 kg/m³, furthermore preferably from 20 to 50 kg/m³. Especially, in the case of the flexible polyurethane foam obtained in the present invention, the polyol (A) having a high-molecular weight is used, and therefore when the flexible polyurethane foam has a low density, the physical properties are expected to be significantly decreased, but as shown in the after-mentioned Examples, even if the core density is such a low density of at most 50 kg/m³, foaming stably occurs, and it is possible to produce the flexible polyurethane foam with good physical properties.

The air flow of the flexible polyurethane foam obtainable by the present invention is at least 1 Umin, preferably from 18 to 100 Umin. When the air flow is at least 1 Umin, the shape-holding properties become good.

### EXAMPLES

Now, the present invention will be described in further detail with reference to Examples, but it should be understood that the present invention is by no means restricted thereto.

Further, the number average molecular weight (Mn) was measured in accordance with the following method.

With respect to some types of monodispersed polystyrene polymers having different polymerization degrees, which are commercially available as standard samples for molecular weight measurement, GPC was measured by using a GPC measuring device (device name: HLC-8220GPC, manufactured by TOSOH CORPORATION), and based on the relation of the molecular weight and the retention time of each polystyrene, a calibration curve was prepared.

The samples were diluted to 0.5 mass% with tetrahydrofuran, then filtrated with a 0.5 µm filter, and then GPCs of the samples were measured by employing the GPC measuring device.

By using the calibration curve, the GPC spectra of such samples were analyzed by a computer, whereby the number average molecular weight (Mn) of each sample was determined.

### <Materials>

Polyol A1: Polyoxypropylene polyol obtained in the following Production Example 1.

Polyol A2: Polyoxypropylene polyol obtained in the following Production Example 2.

Polyol A3: Polyoxypropylene polyol obtained in the following Production Example 3.

Polyol B1: Polyoxypropylene polyol having an average of 2 hydroxy groups and a hydroxy value of 160 mgKOH/g, obtained by subjecting propylene oxide (hereinafter also referred to as "PO") to ring-opening addition polymerization to dipropylene glycol as an initiator by using a potassium hydroxide catalyst.

Polyol B2: Polyoxypropylene polyol having an average of 3 hydroxy groups and a hydroxy value of 168 mgKOH/g, obtained by subjecting PO to ring-opening addition polymerization to a glycerol as an initiator by using a potassium hydroxide catalyst.

Polyol B3: Polyoxypropylene polyol having an average of 2 hydroxy groups and a hydroxy value of 56 mgKOH/g, obtained by subjecting PO to ring-opening addition polymerization to dipropylene glycol as an initiator by using a potassium hydroxide catalyst.

Polyol C1: Polyoxypropylene oxyethylene polyol having an average of 3 hydroxy groups, a hydroxy value of 48 mgKOH/g, and a total oxyethylene group content of 80 mass%, obtained by subjecting a mixture of PO and ethylene oxide (hereinafter also referred to as "EO") to ring-opening addition polymerization to glycerol as an initiator by using a potassium hydroxide catalyst.

Monool D1: Polyoxypropylene monool having an average of 1 hydroxy group and a hydroxy value of 16.7 mgKOH/g, obtained by subjecting PO to ring-opening addition polymerization to n-butyl alcohol as an initiator, by using a zinc hexacyanocobaltate-tert-butyl alcohol complex catalyst.

Further, to each of the polyols A1 to A3, the polyols B1 to B3, the polyol C1 and the monool D1, 1,500 ppm of octadecyl-3-[3-(3,5-di-tert-butyl-4-hydroxypheneyl)propionate] (manufactured by BASF Japan, Ltd., tradename: IRGANOX 1076,) was added as an antioxidant.

Blowing agent: Water

Foam stabilizer a: Silicone type foam stabilizer (manufactured by Dow Corning Toray, Co., Ltd., tradename: SRX-298)

Foam stabilizer b: Silicone type foam stabilizer (manufactured by Dow Corning Toray, Co., Ltd., tradename: SZ-1327)

Urethane-forming catalyst a: A dipropylene glycol solution of triethylenediamine (manufactured by TOSOH CORPORATION, tradename: TEDA-L33)

Urethane-forming catalyst b: Dioctyltin dilaurate (manufactured by Nitto Kasei Co., Ltd., tradename: NEOSTANN U-810)

Urethane-forming catalyst c: Dioctyltin diacetate (manufactured by Nitto Kasei Co., Ltd., tradename: NEOSTANN U-820)

Urethane-forming catalyst d: Tin neodecanoate (manufactured by Nitto Kasei Co., Ltd., tradename: NEOSTANN U-50)

Urethane-forming catalyst e: A mixture of 80 parts by mass of bismuth octylate and 20 parts by mass of octylic acid (manufactured by Nihon Kagaku Sangyo Co., Ltd., tradename: PUCAT 25)

Polyisocyanate compound a: TDI-80 (a mixture of 2,4-TDI/2,6-TDI=80/20 mass%), isocyanate group content: 48.3 mass% (manufactured by Nippon Polyurethane Industry Co., Ltd., tradename: CORONATE T-80)

Flame retardant a: Halogen-containing condensed phosphate (manufactured by DAIHACHI CHEMICAL INDUSTRY, CO., LTD., tradename: CR-504L)

Flame retardant b: Tris β-chloropropyl phosphate (manufactured by ICL-IP JAPAN Ltd., tradename: Fylol PCF)

Flame retardant c: Melamine powder (manufactured by Nissan Chemical Industries, Ltd., average particle size: 43 µm)

### [Production Example 1: Production of polyol (A1)]

PO was subjected to ring-opening addition polymerization to dipropylene glycol as an initiator in the presence of a potassium hydroxide catalyst to a molecular weight of 1,000, followed by purification by magnesium silicate to prepare an initiator (a1). Then PO was subjected to ring-opening addition polymerization to the initiator (a1) in the presence of a zinc hexacyanocobaltate-tert-butyl alcohol complex catalyst as the DMC catalyst to obtain a polyol (A1) as a polyoxypropylene polyol having an average of 2 hydroxy groups, a number average molecular weight (Mn) of 10,000 and a hydroxy value of 11 mgKOH/g. The total degree of unsaturation was 0.007 meq/g.

### [Production Example 2: Production of polyol (A2)]

PO was subjected to ring-opening addition polymerization to the initiator (a1) in the presence of a zinc hexacyanocobaltate-tert-butyl alcohol complex catalyst as the DMC catalyst to obtain a polyol (A2) as a polyoxypropylene polyol having an average of 2 hydroxy groups, a number average molecular weight (Mn) of 15,000 and a hydroxy value of 7.5 mgKOH/g. The total degree of unsaturation was 0.008 meq/g.

### [Production Example 3: Production of polyol (A3)]

PO was subjected to ring-opening addition polymerization to the initiator (a1) in the presence of a zinc hexacyanocobaltate-tert-butyl alcohol complex catalyst as the DMC catalyst to obtain a polyol (A3) as a polyoxypropylene polyol having an average of 2 hydroxy groups, a number average molecular weight (Mn) of 20,000 and a hydroxy value of 5.6 mgKOH/g. The total degree of unsaturation was 0.008 meq/g.

### [Examples 1 to 26]

By using materials in blend ratios shown in Tables 1 to 4, flexible polyurethane foams were produced, and the physical properties of the flexible polyurethane foams obtained were evaluated. The evaluation results are shown in Tables 1 to 4. Here, Examples 1 to 19 and 21 to 24 are Examples of the present invention, and Example 20 is Comparative Example. Examples 25 and 26 are Examples in which a flame retardant was added.

That is, among the materials shown in Tables 1 to 4, all of the materials other than the polyisocyanate compound were mixed to prepare a polyol system solution having a liquid temperature of 23°C±1°C. Further, the polyisocyanate compound was adjusted to a liquid temperature of 23°C±1°C.

A predetermined amount of the polyisocyanate compound was added to the polyol system solution, followed by mixing by a mixer (2,000 revolutions per minute) for 5 seconds to prepare a foam stock solution composition. Immediately after the mixing, the mixture was injected in an open-topped wooden box, and foamed at room temperature (23°C) to obtain a flexible polyurethane foam (slab form). The wooden box to be used was one of 300 mm in length, 300 mm in width and 300 mm in height, having its inside covered with a plastic sheet.

The obtained flexible polyurethane foam was take out from the wooden box and left to stand in a room at room temperature (23°C) and under a humidity of 50%RH for 24 hours, and then evaluations were carried out in accordance with the following methods.

### <Evaluation methods>

### [Cream time, rise time]

The time when mixing of the polyol system solution and the polyisocyanate compound was initiated was regarded as 0 s (0 second), and the time until a reaction mixed fluid was creamed and whitened so as to rise was defined as cream time, and the time between 0 s and the termination of foaming and the outgassing (so-called healthy bubbles) observed from the upper portion of the flexible polyurethane foam was defined as rise time, and they were measured by a stopwatch.

### [Shape-holding property]

Shape-holding property was evaluated based on O: no shrinkage after foaming observed, x : shrinkage and disintegration observed.

### [Core density, rebound resilience of the core]

The core density and the rebound resilience of the core were measured by a method in accordance with JIS K6400 (1997 edition). A sample obtained by removing the skin portion from the center portion of the flexible polyurethane foam, followed by cutting into a size of 250 mm in length, 250 in width and 50 mm in height, was used for the measurement.

### [Other properties]

The 25% hardness (ILD), the 50% hardness (ILD), the 65% hardness (ILD), the air flow, the tensile strength, the elongation, the tear strength, the hysteresis loss, the 50% compression set, the 90% compression set, the 50% wet set and the 90% wet set were measured by a method in accordance with JIS K6400 (1997 edition).

Sag-Factor is a value of "65% hardness (ILD)/25% hardness (ILD)".

The air flow was measured by a method in accordance with the method B in JIS K6400 (1997 edition).

### [Flame retardancy]

The flame retardancy was measured by a method in accordance with California Flammability Standards (CAL) No. 117 or British Standard (BS) No. 5852.

Part I in Section A of California Flammability Standards (CAL) No. 117, size of specimen: 305 mm x 75 mm x 13 mm, heat aging treatment: 104°C for 24 hours, number of specimens: 5 sheets for treatment at normal temperature and 5 sheets for heat aging treatment.

A test is carried out in such a manner that a specimen is hung lengthwise, then burned by a burner for 12 seconds, and thereafter the burner is separated from the test specimen to measure a combustion time and a combustion distance at that time. 5 Sheets of specimens for treatment at normal temperature and 5 sheets of specimens for heat aging treatment are used to obtain an average value. The criteria for passing the test are such that the maximum combustion distance is at most 196 mm, the average combustion distance is at most 147 mm, the maximum combustion time is within 10 seconds and the average combustion time is within 5 seconds.

Part II in Section D of California Flammability Standards (CAL) No. 117, sizes of specimens: 203 mm x 184 mm x 51 mm and 203 mm x 102 mm x 51 mm

A test is carried out in such a manner that a specimen and a cloth are set together in a chair type wooden frame, and then a lighted cigarette is left at rest at a center portion, and they were covered with cloth. Upon completion of burning, the remaining ratio of the test specimen is measured. The tests are repeated three times, and when the remaining ratios of the respective specimens are at least 80%, the criteria for passing the test is fulfilled.

British Standard (BS) No. 5852, sizes of specimens: 450 mm x 450 mm x 75 mm and 450 mm x 300 mm x 75 mm

A test is carried out in such a manner that a specimen is covered with cloth in accordance with a rule and assembled into a chair-type, an ignition wooden frame prepared in accordance with the rule is set at a center portion of a back, and then lint cloth at the bottom is impregnated with 1.4 ml of isopropyl alcohol, followed by ignition. The test is repeated twice, and when an after-flame time and an after-glow time are within 10 minutes, and when the weight loss is within 60 g, the criteria for passing the test is fulfilled.

**[Table 1]**

| | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|
| Foam stock solution composition (part by mass) | Polyol | A1 | 21.2 | | 21.4 | | 21.7 | | | | | |
| | | A2 | | 21.2 | | 21.9 | | 22.2 | | | 19.4 | 19.4 |
| | | A3 | | | | | | | 21.9 | 22.2 | | |
| | | B1 | 29.7 | 29.7 | 30.1 | 30.7 | 30.5 | 31.1 | 30.7 | 31.1 | 27.2 | 27.2 |
| | | B2 | 36.9 | 36.9 | 37.4 | 38.3 | 37.9 | 38.6 | 38.3 | 38.6 | 45.0 | 45.0 |
| | | C1 | 5.4 | 5.4 | 4.2 | 2.1 | 3.0 | 1.0 | 2.1 | 1.0 | 1.0 | 1.0 |
| | | D1 | 6.8 | 6.8 | 6.9 | 7.0 | 6.9 | 7.1 | 7.0 | 7.1 | 7.4 | 7.4 |
| | Blowing agent | Water | 1.3 | 1.3 | 2.0 | 2.0 | 2.6 | 2.6 | 1.3 | 2.0 | 2.0 | 2.6 |
| | Foam stabilizer | a | 0.4 | 0.4 | 0.8 | 0.8 | 0.8 | 0.8 | 0.4 | 0.8 | 0.8 | 0.8 |
| | | b | 0.8 | 0.8 | 0.8 | 0.8 | 0.8 | 0.8 | 0.8 | 0.8 | 0.8 | 0.8 |
| | Urethane-forming catalyst | a | 0.3 | 0.3 | 0.3 | 0.3 | 0.4 | 0.3 | 0.3 | 0.3 | 0.3 | 0.3 |
| | | b | 0.1 | 0.2 | 0.35 | 0.45 | 0.35 | 0.45 | 0.2 | 0.2 | 0.45 | 0.45 |
| | Polyisocyanate compound | a | 31.53 | 31.41 | 38.79 | 38.90 | 45.02 | 45.09 | 31.72 | 38.93 | 39.62 | 45.72 |
| | | Isocyanate index | 105 | 105 | 105 | 105 | 105 | 105 | 105 | 105 | 105 | 105 |
| Reactivity | Cream time | (sec) | 30 | 28 | 22 | 21 | 16 | 16 | 34 | 25 | 21 | 15 |
| | Rise time | (sec) | 208 | 161 | 112 | 105 | 80 | 89 | 203 | 114 | 135 | 107 |
| Shape-holding property | Form outer appearance | - | ○ | ○ | ○ | ○ | ○ | ○ | ○ | ○ | ○ | ○ |
| Physical property evaluation | Core density | (kq/m³) | 65.1 | 60.3 | 42.6 | 42.2 | 37.1 | 35.5 | 59.8 | 42.8 | 42.8 | 33.1 |
| | Air flow | (L/min) | 18 | 2 | 59 | 6 | 63 | 32 | 3 | 2 | 1 | 1 |
| | 25% hardness (ILD) | (N/314cm²) | 84 | 83 | 74 | 73 | 84 | 84 | 92 | 87 | 103 | 107 |
| | 50% hardness (ILD) | (N/314cm²) | 120 | 119 | 104 | 105 | 127 | 124 | 133 | 124 | 142 | 142 |
| | 65% hardness (ILD) | (N/314cm²) | 178 | 172 | 152 | 154 | 184 | 178 | 190 | 180 | 211 | 219 |
| | Sag-Factor | - | 2.12 | 2.06 | 2.07 | 2.12 | 2.19 | 2.12 | 2.06 | 2.07 | 2.05 | 2.05 |
| | Rebound resilience of the core | (%) | 12 | 14 | 9 | 7 | 11 | 10 | 12 | 11 | 12 | 14 |
| | Tensile strength | (kPa) | 79 | 76 | 104 | 75 | 104 | 91 | 75 | 84 | 115 | 111 |
| | Elongation | (%) | 254 | 183 | 236 | 145 | 166 | 143 | 207 | 169 | 228 | 173 |
| | Tear strength | (N/cm) | 4.7 | 4.5 | 5.4 | 4.0 | 5.9 | 4.6 | 5.0 | 5.2 | 6.8 | 6.9 |
| | Hysteresis loss | (%) | 33.4 | 49.6 | 45.3 | 52.8 | 55.2 | 59.5 | 79.7 | 66.1 | 85.7 | 87.3 |
| | 50% compression set | (%) | 3.7 | 1.7 | 4.9 | 2.9 | 6.5 | 4.7 | 1.2 | 2.6 | 4.5 | 8.3 |
| | 50% wet set | (%) | 4.2 | 1.9 | 5.2 | 3.8 | 5.7 | 2.7 | 1.7 | 2.7 | 4.1 | 9.1 |
| | 90% compression set | (%) | 5.9 | 2.9 | 4.3 | 3.3 | 6.7 | 4.6 | 1.9 | 3.4 | 3.2 | 9.6 |
| | 90% wet set | (%) | 4.4 | 0.9 | 4.5 | 2.3 | 6.7 | 4.4 | 2.4 | 4.1 | 4.3 | 7.1 |

**[Table 2]**

| | | | Ex. 11 | Ex. 12 | Ex. 13 | Ex. 14 | Ex. 15 | Ex. 16 | Ex. 17 | Ex. 18 | Ex. 19 | Ex. 20 |
|---|---|---|---|---|---|---|---|---|---|---|---|---|
| Foam stock solution composition (part by mass) | Polyol | A1 | 21.2 | 21.4 | 21.7 | 21.2 | 21.7 | 22.4 | 21.2 | 21.7 | 22.4 | |
| | | A4 | | | | | | | | | | |
| | | B1 | 29.7 | 30.1 | 30.5 | 29.7 | 30.5 | 31.4 | 29.7 | 30.5 | 31.4 | 50.9 |
| | | B2 | 36.9 | 37.4 | 37.9 | 36.9 | 37.9 | 39.0 | 36.9 | 37.9 | 39.0 | 36.9 |
| | | C1 | 6.8 | 6.9 | 6.9 | 5.4 | 3.0 | | 5.4 | 3.0 | | 6.8 |
| | | D1 | 5.4 | 4.2 | 3.0 | 6.8 | 6.9 | 7.2 | 6.8 | 6.9 | 7.2 | 5.4 |
| | Blowing agent | Water | 1.3 | 2.0 | 2.6 | 1.3 | 2.0 | 2.6 | 1.3 | 2.0 | 2.6 | 1.3 |
| | Foam stabilizer | a | 0.4 | 0.8 | 0.8 | 0.4 | 0.8 | 0.8 | 0.4 | 0.8 | 0.8 | 0.4 |
| | | b | 0.8 | 0.8 | 0.8 | 0.8 | 0.8 | 0.8 | 0.8 | 0.8 | 0.8 | 0.8 |
| | Urethane-forming catalyst | a | 0.3 | 0.3 | 0.3 | 0.3 | 0.3 | 0.3 | 0.3 | 0.3 | 0.3 | 0.3 |
| | | b | | | | | | | | | | 0.1 |
| | | c | 0.1 | 0.35 | 0.35 | | | | | | | |
| | | d | | | | 0.2 | 0.3 | 0.45 | | | | |
| | | e | | | | | | | 0.3 | 0.8 | 1.3 | |
| | Polyisocyanate compound | a | 31.53 | 38.79 | 45.02 | 31.54 | 37.08 | 43.18 | 31.54 | 38.93 | 45.34 | 31.85 |
| | | Isocyanate index | 105 | 105 | 105 | 105 | 100 | 100 | 105 | 105 | 105 | 105 |
| Reactivity | Cream time | (sec) | 30 | 21 | 15 | 21 | 15 | 15 | 30 | 20 | 15 | 33 |
| | Rise time | (sec) | 169 | 102 | 84 | 141 | 104 | 74 | 212 | 123 | 89 | |
| Shape-holding property | Form outer appearance | - | ○ | ○ | ○ | ○ | ○ | ○ | ○ | ○ | ○ | × |
| Physical property evaluation | Core density | (kg/m³) | 61.2 | 43.3 | 35.1 | 72.2 | 48.3 | 36.1 | 64.1 | 48.4 | 38.3 | |
| | Air flow | (L/min) | 19 | 47 | 57 | 8 | 6 | 1 | 13 | 9 | 7 | |
| | 25% hardness (ILD) | (N/314cm²) | 85 | 74 | 84 | 105 | 78 | 104 | 67 | 73 | 102 | |
| | 50% hardness (ILD) | (N/314cm²) | 124 | 103 | 119 | 157 | 114 | 142 | 102 | 113 | 146 | |
| | 65% hardness (ILD) | (N/314cm²) | 183 | 152 | 173 | 232 | 166 | 213 | 150 | 163 | 211 | |
| | Sag-Factor | - | 2.15 | 2.06 | 2.06 | 2.21 | 2.11 | 2.05 | 2.24 | 2.23 | 2.07 | |
| | Rebound resilience of the core | (%) | 7 | 6 | 10 | 4 | 5 | 9 | 9 | 8 | 7 | |
| | Tensile strength | (kPa) | 92 | 94 | 106 | 81 | 90 | 115 | 80 | 125 | 117 | |
| | Elongation | (%) | 246 | 210 | 183 | 158 | 168 | 166 | 233 | 211 | 188 | |
| | Tear strength | (N/cm) | 6.3 | 5.6 | 6.4 | 5.5 | 5.6 | 8.3 | 5.7 | 7.7 | 9.0 | |
| | Hysteresis loss | (%) | 33.1 | 47.8 | 57.6 | 27.8 | 41.7 | 55.7 | 29.4 | 43.5 | 61.5 | |
| | 50% compression set | (%) | 0.8 | 1.9 | 5.1 | 1.5 | 4.7 | 2.8 | 3.8 | 7.2 | 7.2 | |
| | 50% wet set | (%) | 2.1 | 3.2 | 6.4 | 1.0 | 4.6 | 3.6 | 2.4 | 5.5 | 6.6 | |
| | 90% compression set | (%) | 4.5 | 4.7 | 7.6 | 0.5 | 2.0 | 1.0 | 3.5 | 5.6 | 8.8 | |
| | 90% wet set | (%) | 1.8 | 4.1 | 12.8 | 1.1 | 3.8 | 2.1 | 2.5 | 5.4 | 6.4 | |

**[Table 3]**

| | | | Ex. 21 | Ex. 22 | Ex. 23 | Ex. 24 |
|---|---|---|---|---|---|---|
| Foam stock solution composition (part by mass) | Polyol | A1 | 21.2 | 29.7 | 25.0 | 50.9 |
| | | B3 | 29.7 | 21.2 | 17.8 | |
| | | B2 | 36.9 | 36.9 | 45.0 | 36.9 |
| | | C1 | 5.4 | 5.4 | 5.4 | 5.4 |
| | | D1 | 6.8 | 6.8 | 6.8 | 6.8 |
| | Blowing agent | Water | 1.3 | 1.3 | 1.3 | 1.3 |
| | Foam stabilizer | a | 0.4 | 0.4 | 0.4 | 0.4 |
| | | b | 0.8 | 0.8 | 0.8 | 0.8 |
| | Urethane-forming catalyst | a | 0.3 | 0.3 | 0.3 | 0.6 |
| | | b | 0.1 | 0.1 | 0.1 | 0.1 |
| | Polyisocyanate compound | a | 26.60 | 25.87 | 27.59 | 24.32 |
| | | Isocyanate index | 105 | 105 | 105 | 105 |
| Reactivity | Cream time | (sec) | 39 | 37 | 31 | 20 |
| | Rise time | (sec) | 311 | 300 | 254 | 264 |
| Shape-holding property | Form outer appearance | - | ○ | ○ | ○ | ○ |
| Physical property evaluation | Core density | (kg/m³) | 60.0 | 60.3 | 60.0 | 58.6 |
| | Air flow | (L/min) | 1 | 3 | 1 | 2 |
| | 25% hardness (ILD) | (N/314cm²) | 110 | 111 | 103 | 67 |
| | 50% hardness (ILD) | (N/314cm²) | 161 | 162 | 148 | 97 |
| | 65% hardness (ILD) | (N/314cm²) | 241 | 241 | 220 | 145 |
| | Sag-Factor | - | 2.20 | 2.18 | 2.13 | 2.18 |
| | Rebound resilience of the core | (%) | 21 | 22 | 23 | 17 |
| | Tensile strength | (kPa) | 57 | 60 | 58 | 52 |
| | Elongation | (%) | 157 | 161 | 148 | 149 |
| | Tear strength | (N/cm) | 3.7 | 4.1 | 3.9 | 3.5 |
| | Hysteresis loss | (%) | 40.1 | 32.9 | 38.0 | 30.7 |
| | 50% compression set | (%) | 2.0 | 1.7 | 1.5 | 4.0 |
| | 50% wet set | (%) | 2.6 | 0.9 | 1.8 | 1.6 |
| | 90% compression set | (%) | 5.0 | 4.0 | 3.0 | 5.4 |
| | 90% wet set | (%) | 3.1 | 2.4 | 2.8 | 2.1 |

**[Table 4]**

| | | | | Ex. 25 | Ex. 26 |
|---|---|---|---|---|---|
| Foam stock solution composition (part by mass) | Polyol | | A1 | 22.4 | 22.4 |
| | | | B1 | 31.4 | 31.4 |
| | | | B2 | 39.0 | 39.0 |
| | | | C1 | 4.0 | 2.0 |
| | | | D1 | 7.2 | 7.2 |
| | Blowing agent | | Water | 2.5 | 2.8 |
| | Foam stabilizer | | a | 0.6 | 0.6 |
| | | | b | 0.6 | 0.6 |
| | Urethane-forming catalyst | | a | 0.2 | 0.18 |
| | | | b | 0.3 | 0.3 |
| | Flame retardant | | a | 12 | 18 |
| | | | b | 6 | 4 |
| | | | c | | 20 |
| | Polyisocyanate compound | | a | 44.92 | 48.11 |
| | | | Isocyanate index | 105 | 105 |
| Reactivity | Cream time | | (sec) | 30 | 22 |
| | Rise time | | (sec) | 131 | 139 |
| Shape-holding property | Form outer appearance | | - | ○ | ○ |
| Physical property evaluation | Core density | | (kg/m³) | 40.8 | 39.6 |
| | Air flow | | (Umin) | 25 | 19 |
| | 25% hardness (ILD) | | (N/314cm²) | 69 | 61 |
| | 50% hardness (ILD) | | (N/314cm²) | 101 | 99 |
| | 65% hardness (ILD) | | (N/314cm²) | 150 | 136 |
| | Sag-Factor | | - | 2.17 | 2.23 |
| | Rebound resilience of the core | | (%) | 13 | 8 |
| | Tensile strength | | (kPa) | 92 | 74 |
| | Elongation | | (%) | 247 | 175 |
| | Tear strength | | (N/cm) | 6.7 | 5.3 |
| | Hysteresis loss | | (%) | 40.7 | 56.1 |
| | 50% compression set | | (%) | 4.3 | 4.3 |
| | 50% wet set | | (%) | 4.8 | 4.8 |
| | 90% compression set | | (%) | 8.2 | 16.0 |
| | 90% wet set | | (%) | 8.8 | 19.3 |
| Flammability test | CAL test Section A | Average combustion distance | (mm) | 90 | - |
| | | Average combustion time | (sec) | 0 | - |
| | | Maximum combustion distance | (mm) | 100 | - |
| | | Maximum combustion time | (sec) | 0 | - |
| | CAL test Section D | Remaining ratio | (%) | 96 | - |
| | Judge | | - | Pass | - |
| | BS test | Weight loss | (g) | - | 28.5 |
| | | Combustion time | (sec) | - | 160 |
| | Jude | | - | - | Pass |

As shown in the results in Tables 1 to 4, in each of Examples 1 to 19 and 21 to 26 of the present invention, the cream time of the foam stock solution composition is relatively long, the reactivity is moderate, the moldability is good, and the operation efficiency is excellent. On the other hand, in Example 20 in which no polyol (A) was used, the stability at the time of foaming deteriorated, and collapse occurred.

Further, the flexible polyurethane foam obtained in each of Examples 1 to 19 and 21 to 24 is excellent in hardness and durability, and has a Sag-Factor within a range of from 2.05 to 2.25, whereby it is possible to obtain performances such as excellent durability and excellent comfortability to sleep when the flexible polyurethane foam is used for mattresses.

Further, the flexible polyurethane foam obtained in each of Examples 25 and 26 has good flame retardancy and a Sag-Factor within a range of from 2.05 to 2.25, whereby it is possible to obtain performances such as excellent flame retardancy and comfortability to sleep when the flexible polyurethane foam is used for mattresses.

Further, by comparison between Example 1 and Example 2, as compared with Example 1, in Example 2 in which the polyol (A2) having a large number average molecular weight (Mn) and a small hydroxy value was used, durability was more improved. Likewise, by comparison between Example 3 and Example 4, in Example 4 in which the polyol (A2) having a large number average molecular weight (Mn) and a small hydroxy value was used, durability was more improved. The same also applies to a case where Example 5 and Example 6 were compared.

Further, the flexible polyurethane foam obtained in each of Examples 1, 3, 5 and 11 to 13, is excellent in hardness and the durability, has a Sag-Factor within a range of from 2.05 to 2.25, and further has air flow within a range of from 18 to 100 L/min, whereby it is possible to obtain performances such as excellent durability and comfortability to sleep and further obtain a performance such as good air flow thereby to prevent heat accumulation, when the flexible polyurethane foam is used for mattresses.

### [Temperature dependence of hardness]

Regarding the flexible polyurethane foam obtained in Example 24, the hardness was measured in an atmosphere at 20°C or -5°C to evaluate the temperature dependence of the hardness. Further, a glass transition point was measured.

That is, by using a CPU gauge MODEL-9500 (product name: push-pull gauge) manufactured by AIKOH ENGINEERING CO., LTD., a semi-sphere steel ball having a diameter of 20 mm was pushed into the flexible polyurethane foam to a depth of 15 mm at a rate of 50 mm/min, and a value measured at that time was regarded as a hardness measured by a push-pull gauge.

The glass transition point was determined by measuring the dynamic viscoelasticity in accordance with JIS K7244. By using, as the apparatus, DMS 6100 (product name) manufactured by Seiko Instruments Inc. a storage elastic modulus (E') was measured at a frequency of 10 Hz while the temperature was raised at 3°C/min in a nitrogen atmosphere. A temperature at a top peak of the storage elastic modulus (E') was measured, and taken as a glass transition temperature.

The hardnesses of the flexible polyurethane foam obtained in Example 24, measured by a push-pull gauge were 3.9N in an atmosphere at 20°C and 6.4N in an atmosphere at -5°C. That is, the hardness hardly increased even when the temperature decreased. Further, the glass transition temperature was -54.5°C. From these results, it was confirmed that the hardness hardly changed due to temperature decrease.

### INDUSTRIAL APPLICABILITY

The flexible polyurethane foam obtainable by the present invention has low resilience, and is suitable as a shock absorber, a sound absorbent or a vibration absorber. Further, it is also suitable for mattresses; furnitures such as a sofa or a sheet for furnitures; or interior members for automobiles, such as a member to be mounted between an automobile sheet pad and a layer, a urethane pad for head rests or a member to be mounted between a urethane pad for head rests and a layer. It is particularly suitable used for mattresses.

The entire disclosure of Japanese Patent Application No. 2010-086125 filed on April 2, 2010 including specification, claims and summary is incorporated herein by reference in its entirety.

## Claims

1. A process for producing a flexible polyurethane foam, which comprises reacting a polyol mixture (X) with a polyisocyanate compound in the presence of a urethane-forming catalyst, a blowing agent and a foam stabilizer, **characterized in that** the polyol mixture (X) comprises the following polyol (A), the following polyol (B) and the following monool (D):
polyol (A): a polyoxyalkylene polyol having an average of from 2 to 3 hydroxy groups, a number average molecular weight of from 8,500 to 30,000 and an oxyethylene group content of from 0 to 30 mass%;
polyol (B): a polyoxyalkylene polyol having an average of from 2 to 3 hydroxy groups, a hydroxy value of from 20 to 250 mgKOH/g and an oxyethylene group content of from 0 to 20 mass%;
monool (D): a polyoxyalkylene monool having a hydroxy value of from 10 to 200 mgKOH/g.

2. The process for producing a flexible polyurethane foam according to Claim 1, wherein the urethane-forming catalyst contains a dioctyltin.

3. The process for producing a flexible polyurethane foam according to Claim 1 or 2, wherein the flexible polyurethane foam has a core density of from 10 to 110 kg/m³.

4. The process for producing a flexible polyurethane foam according to any one of Claims 1 to 3, wherein the proportion of the polyol (A) is from 5 to 80 parts by mass per 100 parts by mass of the total amount of the polyol (A) and the polyol (B).

5. The process for producing a flexible polyurethane foam according to any one of Claims 1 to 4, wherein the proportion of the monool (D) is from 1 to 25 parts by mass per 100 parts by mass of the polyol mixture (X).

6. The process for producing a flexible polyurethane foam according to any one of Claims 1 to 5, wherein the monool (D) is a polyoxypropylene monool obtained by ring-opening addition polymerization of propylene oxide alone to an initiator.

7. The process for producing a flexible polyurethane foam according to any one of Claims 1 to 6, wherein the polyol mixture (X) further contains the following polyol (C), and the proportion of the polyol (C) is from 0.1 to 10 parts by mass per 100 parts by mass of the polyol mixture (X):
polyol (C): a polyoxyalkylene polyol having an average of from 2 to 6 hydroxy groups, a hydroxy value of from 10 to 60 mgKOH/g and an oxyethylene group content of at least 50 mass%.

8. The process for producing a flexible polyurethane foam according to any one of Claims 1 to 7, wherein the urethane-forming catalyst is used in a proportion of from 0.001 to 5.0 parts by mass per 100 parts by mass of the polyol mixture (X).

9. The process for producing a flexible polyurethane foam according to any one of Claims 1 to 8, wherein the blowing agent is only water.

10. A flexible polyurethane foam produced by the process as defined in any one of Claims 1 to 9.

11. The flexible polyurethane foam according to Claim 10, which is used for mattresses.

12. The flexible polyurethane foam according to Claim 10, which is used for interior members of automobiles.
